# EUROPÄISCHE PATENTSCHRIFT

(11) **EP 2 763 768 B1**
(45) Veröffentlichungstag und Bekanntmachung des Hinweises auf die Patenterteilung: **14.12.2016**
(21) Anmeldenummer: 12769320.8
(22) Anmeldetag: 17.09.2012
(51) Int. Cl.: B01D 1/22, F16M 11/10, F16M 11/18, F16M 11/42, B01L 9/04, B01D 3/08, F16M 11/24

(54) **ROTATIONSVERDAMPFER**
ROTARY EVAPORATOR
ÉVAPORATEUR ROTATIF

(30) Priorität: 08.10.2011 DE 202011106535 U
(43) Veröffentlichungstag der Anmeldung: 13.08.2014
(73) Patentinhaber: KNF Neuberger GmbH, 79112 Freiburg (DE)
(72) Erfinder: HAUSER, Erwin, 79312 Emmendingen (DE); BECKER, Erich, 79189 Bad Krozingen (DE)
(74) Vertreter: Börjes-Pestalozza, Henrich
(86) Internationale Anmeldenummer: PCT/EP2012/003879
(87) Internationale Veröffentlichungsnummer: WO 2013/050108

(56) Entgegenhaltungen:
- EP-A1- 0 156 937
- DE-A1- 3 447 433
- DE-A1- 3 522 607

## Beschreibung

Die Erfindung betrifft einen Rotationsverdampfer mit einem Geräteständer, auf dem ein Führungsturm übersteht, der eine Halterung hat, an welcher ein Verdampfungsgefäß um eine horizontale Schwenkachse verschwenkbar gehalten ist und die ein mit dem Führungsturm verbundenes Halteteil aufweist, das seitlich am Führungsturm in dessen Längsrichtung verfahrbar ist, und an dem ein mit dem Verdampfungsgefäß verbindbares Trageteil um eine horizontale Schwenkachse verschwenkbar gehalten ist.

Rotationsverdampfer sind bereits in verschiedenen Ausführungen bekannt. Solche Rotationsverdampfer sind zur schonenden Trennung von Flüssigkeitsgemischen und Lösungen unter Nutzung der unterschiedlichen Siedepunkte der Komponenten bestimmt. So können Rotationsverdampfer auch zur Trocknung, zur Lösemittelrückgewinnung und zu ähnlichen Prozessen genutzt werden. Als Verdampferelement dient regelmäßig ein Heizbad, in dem sich ein erhitztes Wasser- oder Ölvolumen befindet. In der erhitzten Wasser oder Ölmenge des Heizbades rotiert ein Verdampferkolben, der in seinem Kolbeninneren die einzudampfende Lösung enthält. Diese Lösung wird auf den erhitzten Kolben-Innenwänden des rotierenden Verdampferkolbens als dünner Flüssigkeitsfilm verteilt, der dort leicht verdunsten kann. Durch die Rotation des Verdampferkolbens wird auch ein Siedeverzug vermieden und in Verbindung mit dem Heizbad eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein: Evakuieren des Prozessraumes unterstützt. Die Verdampferleistung wird durch die Heizbadtemperatur, die Kolbengröße und Rotätionsgeschwindigkeit des Verdampferkolbens sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können, und um an dem benötigten Kühler die erforderlichen Kühlmittelzu- und -abläufe anschließen zu können, ist an dem auf dem Verdampferkolben umfassenden Glasaufbau des Rotationsverdampfers zumindest ein Schlauchanschluss und regelmäßig mehrere Schlauchanschlüsse vorgesehen, die über jeweils eine flexible Schlauchleitung mit einer Vakuumpumpe oder mit einem Kühlmittelzu- oder -ablauf verbunden sind.

In den vergangenen Jahrzehnten wurde die Bedienbarkeit, die Sicherheit und die Automatisierung der vorbekannten Rotationsverdampfer wesentlich verbessert. Verschiedentlich sind jedoch einige Nachteile feststellbar.

Aus der GB 2171922 A ist bereits ein Rotationsverdampfer der eingangs erwähnten Art mit einem Geräteständer vorbekannt, auf dem ein Führungsturm übersteht, der eine Halterung hat, an welcher ein Verdampfungsgefäß um eine horizontale Schwenkachse verschwenkbar gehalten ist. Die Halterung weist ein mit dem Führungsturm verbundenes Halteteil auf, das seitlich am Führungsturm in dessen Längsrichtung verfahrbar ist. An dem Halteteil ist ein mit dem Verdampfungsgefäß verbindbares Trageteil um eine horizontale Schwenkachse verschwenkbar gehalten, wobei zum Einstellen und Festlegen der gewählten Schwenkposition eine Feststellschraube vorgesehen ist, die an ihrem einen Schraubenende einen Stellkopf oder dergleichen Handhabe zur manuellen Betätigung aufweist. Der vorbekannte Rotationsverdampfer lässt sich an die unterschiedlichen Abmessungen von verschiedenen Verdampfungsgefäßen anpassen, jedoch sind die mit dem vorbekannten Rotationsverdampfer bewerkstelligten Geräteaufbauten zu einem späteren Zeitpunkt nicht mehr ohne weiteres zu reproduzieren.

Aus der EP 0 156 937 A1 ist ein Rotationsverdampfer vorbekannt, der einen plattenförmigen Geräteständer hat. Über den Geräteständer steht ein Turm vor, an dessen freiem Turmende ein als Halterung dienender Schwenkarm schwenkbar gelagert ist. An dem dem Turm abgewandten Armende des Schwenkarmes ist ein Verdampfungsgefäß um seine Längsachse drehbar gehalten. Durch Verschwenken des Schwenkarmes ist das Verdampfungsgefäß zwischen zwei Endstellungen beliebig verstellbar, so dass durch verschieden weites Eintauchen des Verdampfungsgefäßes in das Wasserbad verschieden große Wärmemengen zugeführt werden können bzw. die Zuführung von Wärme unterbrochen ist. Um das Verdampfungsgefäß in das Wasserbad eintauchen oder herausheben zu können und um dazu die Höhe des Verdampfungsgefäßes verändern zu können, ist der als Halterung dienende Schwenkarm elektromechanisch, pneumatisch oder hydraulisch zwischen zwei Endstellungen in beide Schwenkrichtungen verschenkbar und in der jeweils gewählten Schwenkposition festlegbar. Dabei sieht eine in EP 0 156 937 A1 beschriebene Ausführungsform vor, dass der Schwenkarm mittels einer Gewindespindel verschwenkbar ist, die am Schwenkarm abgreift. Zur Höhenverstellung des Verdampfungsgefäßes wird der Schwenkarm verschwenkt. Soweit in der EP 0 156 937 A1 ein Spindeltrieb mit einer Stellspindel vorgesehen ist, ist dieser Spindeltrieb zum Verschwenken des Schwenkarmes vorgesehen.

Bei den vorbekannten Rotationsverdampfern ist an dem über den Geräteständer überstehenden Führungsturm eine Halterung vorgesehen, an welcher ein meist als Verdampferkolben ausgebildetes Verdampfungsgefäß um eine horizontale Schwenkachse verschwenkbar gehalten ist. Diese Halterung ist meist mit einer Schraubverbindung am Führungsturm gesichert, die vor dem Verschwenken der Halterung gelöst werden muß und nach dem Verschwenken wieder festzuziehen ist. Dabei besteht die Gefahr, dass der an der Halterung befestigte und auch das Verdampfungsgefäß umfassende Glasaufbau in den Anschlag fällt, so dass das bruchempfindliche und zusätzlich unter Vakuum stehende Verdampfungsgefäß zerbrechen kann. Die umständliche Verschwenkbarkeit der an vorbekannten Rotationsverdampfern vorgesehenen Halterung erschwert den Austausch der Verdampfungsgefäße und das Einwechseln eines größeren oder kleineren Verdampfungsgefäßes, was eventuell auch die Veränderung des Schwenkwinkels erforderlich machen kann. Das Einwechseln größerer oder kleinerer Verdampfungsgefäße wird auch dadurch zusätzlich erschwert, dass auch das eingewechselte Verdampfungsgefäß gut in das im Temperiergefäß des Rotationsverdampfers befindliche Heizbad eintauchen können muß, wobei den unterschiedlichen Abmessungen der verschiedenen Verdampfungsgefäße nur durch eine Veränderung der Hubhöhe und des Schwenkwinkels Rechnung getragen werden kann.

Es besteht daher die Aufgabe, einen Rotationsverdampfer zu schaffen, der leicht und bequem an die unterschiedlichen Abmessungen der verschiedenen Verdampfungsgefäße angepasst werden kann, wobei eine möglichst einfache und sichere Reproduzierbarkeit der mit dem erfindungsgemäßen Rotationsverdampfer bewerkstelligten Geräteaufbauten gewährleistet sein soll.

Der erfindungsgemäße Vorschlag zur Lösung dieser Aufgabe sieht vor, dass das Halteteil als Schlitten ausgebildet ist, dass zum Einstellen und Festlegen der gewählten Schwenkposition ein Spindeltrieb vorgesehen ist, der eine Stellspindel mit selbsthemmendem Spindelgewinde hat, dass die Stellspindel am Halteteil um eine horizontale Schwenkachse verschenkbar, aber in axialer Richtung unverrückbar gelagert ist, dass die Stellspindel mit einer Spindelmutter zusammenwirkt, die am Trageteil um eine horizontale Schwenkachse verschwenkbar gehalten ist, dass die Stellspindel an zumindest einem Spindelende ein Stellrad oder dergleichen Handhabe aufweist, dass zum Positionieren des Trageteiles eine Skalierung vorgesehen ist, die zwischen dem Halteteil und dem Trageteil angeordnet ist, dass die Skalierung eine Skala hat, die am Halteteil oder am Trageteil vorgesehen ist, und dass der Skala eine Messlinie oder dergleichen Anzeige zugeordnet ist, die am Trageteil oder am Halteteil angeordnet ist.

Die am erfindungsgemäßen Rotationsverdampfer vorgesehene Halterung weist ein mit dem Führungsturm verbundenes Halteteil auf, das als ein am Führungsturm in Längsrichtung verfahrbarer Schlitten ausgebildet ist. An diesem Halteteil ist ein mit dem Verdampfungsgefäß verbindbares Trageteil um eine horizontale Schwenkachse verschwenkbar gehalten. Zum Einstellen und Festlegen der gewählten Schwenkposition ist ein Spindeltrieb vorgesehen, der eine Stellspindel mit selbsthemmendem Spindelgewinde hat. Um eine einfache Handhabung des erfindungsgemäßen Rotationsverdampfers zu ermöglichen, ist an zumindest einem Spindelende der Stellspindel ein Stellrad oder dergleichen Handhabe vorgesehen. Durch Verdrehen dieser Handhabe wird auch die damit drehfest verbundene Stellspindel derart gedreht, dass die beispielsweise am verschwenkbar gelagerten Trageteil befindliche Spindelmutter ihre Relativposition auf der Stellspindel in Längsrichtung verändert. Durch Drehen an dieser Stellspindel, die am Halteteil um eine horizontale Schwenkachse verschwenkbar ist und deren Spindelmutter am Trageteil ebenfalls um eine horizontale Schwenkachse verschwenkbar gehalten ist, kann der Schwenkwinkel zwischen dem Halteteil und dem Trageteil der Halterung verändert und die Schwenkposition eines am Trageteil befestigten Verdampfungsgefäßes variiert werden. Da die Stellspindel ein selbsthemmendes Spindelgewinde hat, ist eine zusätzliche Arretierung nicht notwendig. Bei dem erfindungsgemäßen Rotationsverdampfer lässt sich der Schwenkwinkel des Verdampfungsgefäßes leicht verändern und an die unterschiedlichen Abmessungen der verschiedenen, zum Einsatz bestimmten Verdampfungsgefäße anpassen. Dabei ist der erfindungsgemäße Rotationsverdampfer konstruktiv besonders einfach ausgestaltet und besteht aus vergleichsweise wenigen Bestandteilen. Um eine einfache und sichere Reproduzierbarkeit der mit dem erfindungsgemäßen Rotationsverdampfer bewerkstelligten Geräteaufbauten sicherzustellen und um dessen Handhabung noch zusätzlich zu erleichtern, weist der erfindungsgemäße Rotationsverdampfer zum Positionieren des Trageteiles eine Skalierung auf, die zwischen dem Halteteil und dem Trageteil angeordnet ist. Diese Skalierung hat eine Skala, die am Halteteil oder am Trageteil vorgesehen ist, wobei der Skala eine Messlinie oder dergleichen Anzeige zugeordnet ist, die am Trageteil oder am Halteteil angeordnet ist.

Eine konstruktiv besonders einfache und aus vergleichsweise wenigen Bestandteilen hergestellte Ausführung gemäß der Erfindung besteht darin, dass das Halteteil als Schlitten ausgebildet ist, der seitlich am Führungsturm in dessen Längsrichtung verfahrbar ist.

Weitere Merkmale der Erfindung ergeben sich aus der folgenden Beschreibung eines erfindungsgemäßen Ausführungsbeispiels in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
Fig. 1 einen in einer perspektivischen Gesamtdarstellung gezeigten Rotationsverdampfer, der einen Geräteständer hat, an dem ein Führungsturm übersteht, wobei an dem Führungsturm seitlich ein als Halterung dienender Schlitten verfahrbar ist, der einen Glasaufbau mit einem, in ein Temperiergefäß eintauchbaren Verdampfungsgefäß trägt, und wobei dem Verdampfungsgefäß ein Rotationsantrieb zugeordnet ist, der das Verdampfungsgefäß im Temperiergefäß um seine Längsachse drehen lässt,
Fig. 2 den Führungsturm des in Figur 1 gezeigten Rotationsverdampfers in einer perspektivischen Querschnittsdarstellung,
Fig. 3 den in einer schematisierten Einzelteildarstellung gezeigten und im Führungsturm angeordneten Hubantrieb, der zum Verfahren des als Halterung dienenden Schlittens am Führungsturm bestimmt ist,
Fig. 4 den in einem Längsschnitt dargestellten Schlitten, der am Führungsturm verfahrbar ist und der den Glasaufbau trägt, wobei am Schlitten ein um eine horizontale Schwenkachse verschwenkbarer Rotationsantrieb vorgesehen ist, mit dem das Verdampfungsgefäß des Glasaufbaus im Temperiergefäß des Rotationsverdampfers rotierbar ist,
Fig. 5 den Führungsturm aus Figur 2 bis 4 in einer perspektivischen Detailansicht im Bereich des Schlittens, wobei eine Skalierung am Führungsturm zur Anzeige der Hubhöhe und eine Skalierung am Schlitten zur Anzeige des für den Rotationsantrieb gewählten Schwenkwinkels zu erkennen sind,
Fig. 6 den Rotationsantrieb aus Figur 4 in einem Längsschnitt, wobei der Rotationsantrieb eine drehantreibbare Nabe hat, die eine als Glashohlwelle ausgebildete Dampfdurchführung durchsetzt, wobei die Glashohlwelle an ihrem einen Wellenende das Verdampfungsgefäß trägt und mit ihrem anderen Wellenende in einem, zu einem Kühler führenden Anschlussstutzen mündet, und wobei die Drehbewegung der drehantreibbaren Nabe des Rotationsantriebs auf die Glashohlwelle mittels eines hülsenförmigen Klemmeinsatzes übertragen wird, der auf die Glashohlwelle aufgeschoben ist,
Fig. 7 den Rotationsantrieb aus Figur 4 und 6 in einem Detail-Längsschnitt im Bereich des auf die Glashohlwelle aufgeschobenen Klemmeinsatzes,
Fig. 8 den Klemmeinsatz aus Figur 6 und 7 in einer perspektivischen Darstellung,
Fig. 9 die die Nabe des Rotationsantriebes durchsetzende Glashohlwelle im Bereich eines als Gleitringdichtung dienenden Dichtringes, welcher Dichtring mit einem äußeren Einspannrand zwischen dem kühlerseitigen Anschlussstutzen und einem Antriebsgehäuse des Rotationsantriebs eingespannt ist und mit einer inneren Ringzone dichtend an der rotierenden Glashohlwelle anliegt,
Fig. 10 den Dichtring aus Figur 9 in einer perspektivischen Darstellung, und
Fig. 11 den Rotationsverdampfer aus Figur 1 in einer Detaildarstellung im Bereich seiner als Fernbedienung ausgebildeten Bedienelemente.

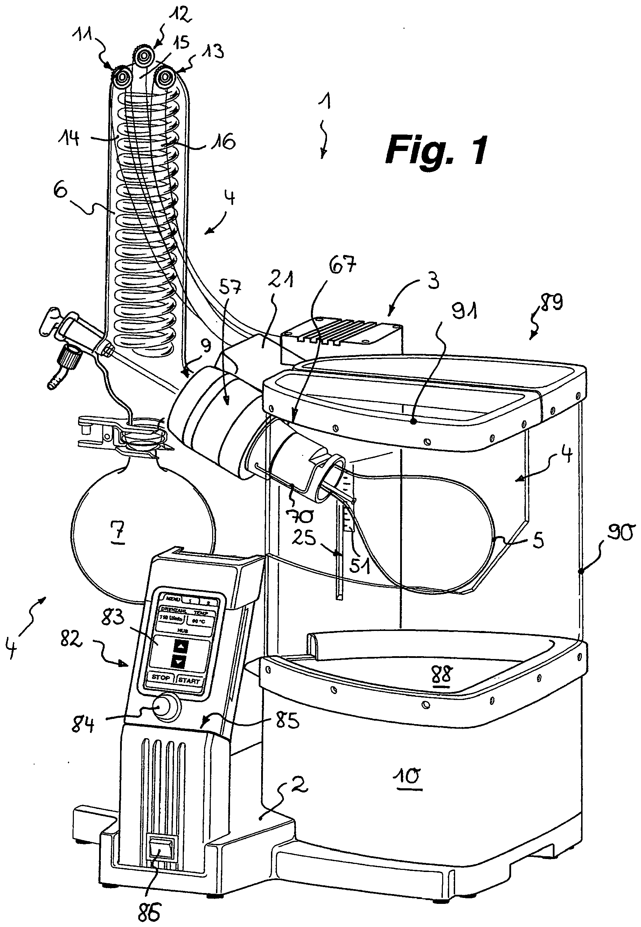

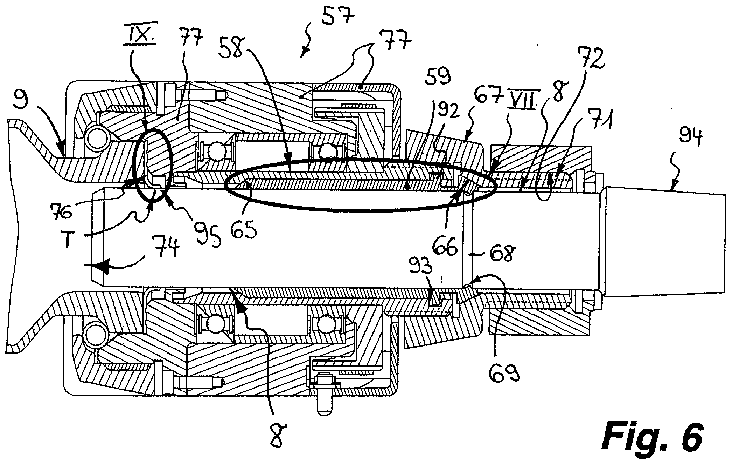

In Figur 1 ist ein Rotationsverdampfer 1 in einer perspektivischen Ansicht dargestellt. Der Rotationsverdampfer 1 hat einen Geräteständer 2, der die Struktur des Rotationsverdampfers trägt. Auf dem Geräteständer 2 steht ein Führungsturm 3 über, der eine vertikal orientierte Längsachse hat. Der Rotationsverdampfer 1 weist einen Glasaufbau 4 auf, der ein hier als Verdampferkolben ausgebildetes Verdampfungsgefäß 5, einen Kühler 6 sowie ein mit dem Kühler 6 lösbar verbundenes Auffanggefäß 7 umfasst. Dabei ist das Verdampfungsgefäß 5 an einer als Dampfdurchführung dienenden und in den Figuren 6, 7 und 9 näher dargestellten Glashohlwelle 8 gehalten, die an ihrem dem Verdampfungsgefäß 5 abgewandten Wellenende in einem Anschlussstutzen 9 des Kühlers 6 mündet.

Der Rotationsverdampfer 1 weist ein hier als Heizbad ausgebildetes Temperiergefäß 10 auf, in welches das Verdampfungsgefäß 5 bereichsweise eintaucht. Um das Verdampfungsgefäß 5 mit einem Teilbereich im Temperiergefäß 10 positionieren zu können und um den Verdampfungsprozess durch Entnahme des Verdampfungsgefäßes 5 aus dem Temperiergefäß 10 bei Bedarf unterbrechen zu können, ist der Glasaufbau 4 und mit ihm das Verdampfungsgefäß 5 am Führungsturm 3 verfahrbar gehalten.

In dem hier als Heizbad ausgebildeten Temperiergefäß 10 befindet sich beispielsweise ein erhitztes Wasser- oder Ölvolumen. In der erhitzten Wasser- oder Ölmenge des Temperiergefäßes 10 rotiert das Verdampfungsgefäß 5, das in seinem kolbenförmigen Innenraum die einzudampfende Lösung enthält. Diese Lösung wird auf den erhitzten Gefäß-Innenwänden des rotierenden Verdampfungsgefäßes 5 als dünner Flüssigkeitsfilm verteilt, der dort leicht verdunsten kann. Durch die Rotation des Verdampfungsgefäßes 5 wird auch ein Siedeverzug vermieden und in Verbindung mit dem im Temperiergefäß 10 befindlichen Heizbad 10 eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein Evakuieren des Prozessraumes unterstützt. Die Verdampferleistung wird durch die Heizbadtemperatur, die Größe des Verdampfungsgefäßes 5 und dessen Rotationsgeschwindigkeit sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können und um einen Kühlmittelzu- und -abfluß 6 zu bewerkstelligen, ist an dem auch das Verdampfungsgefäß 5 umfassenden Glasaufbau des Rotationsverdampfers zumindest ein Schlauchanschluss und regelmäßig mehrere Schlauchanschlüsse 11, 12, 13 vorgesehen, die über jeweils eine flexible Schlauchleitung 14, 15, 16 mit einer Vakuumpumpe beziehungsweise mit dem Kühlmittelzu- und - abfluß verbunden sind.

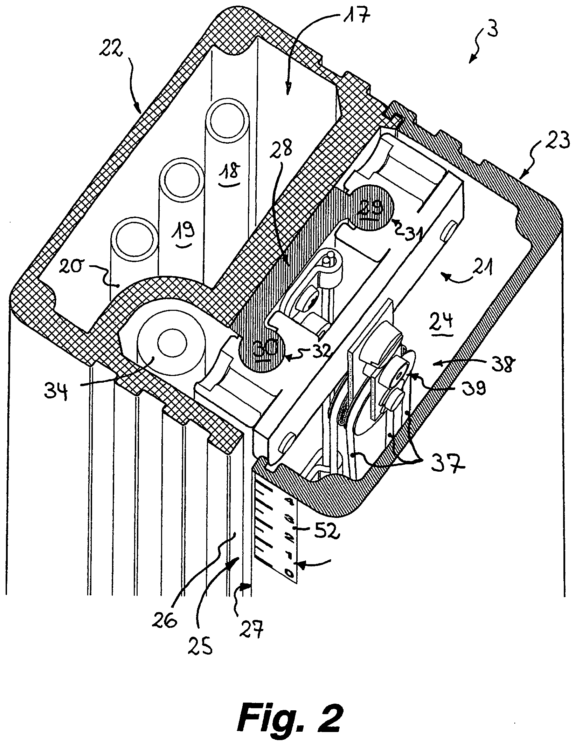

Aus der perspektivischen Querschnittsdarstellung in Figur 2 wird deutlich, dass der Führungsturm 3 einen in seiner Längserstreckung orientierten Kanal 17 aufweist, in dem ein Leitungsabschnitt zumindest einer mit dem Glasaufbau 4 verbundenen Fluidleitung vorgesehen ist. Die zumindest eine Fluidleitung endet in einem ihr zugeordneten, hier aber nicht weiter dargestellten Schlauchanschluss, der an einem bodenseitigen und dem freien Ende des Führungsturmes 3 abgewandten Bereich des Rotationsverdampfers angeordnet ist. Da somit ein vergleichsweise langer Leitungsabschnitt der zumindest einen Fluidleitung im Kanal 17 des Führungsturmes 3 geführt ist, kann der außerhalb des Führungsturmes 3 frei verlegte und hier als Schlauchleitung 14, 15 oder 16 ausgebildete Leitungsabschnitt dieser Fluidleitung vergleichsweise kurz gehalten werden. Das Risiko eines versehentlichen Verfangens in diesen freiverlegten Schlauchleitungen 14, 15, 16 ist damit minimiert. Da die zumindest eine Fluidleitung innerhalb des Führungsturmes 3 nach unten geführt wird, können die Anschlüsse dieser Fluidleitungen an unbewegten Teilen der Struktur im bodenseitigen und dem freien Ende des Führungsturmes 3 abgewandten Bereich des Rotationsverdampfers 1 angeordnet werden. Bei dem hier dargestellten Rotationsverdampfer sind die Anschlüsse der Fluidleitungen in der Bodenplatte des Geräteständers 2 angeordnet.

Um im Kanal 17 des Führungsturmes 3 beispielsweise die zu einer Vakuumpumpe führende Fluidleitung sowie die als Kühlmittelzu- und -abfluß vorgesehenen Fluidleitungen und somit mehrere Fluidleitungen führen zu können, ist vorgesehen, dass die im Kanal geführten Leitungsabschnitte als Schlauchleitungen 18, 19, 20 ausgebildet sind. Dabei sind die im Kanal 17 geführten und als Leitungsabschnitt dienenden Schlauchleitungen 18, 19, 20 auch an ihrem dem bodenseitigen ersten Schlauchanschluss abgewandten Leitungsabschnittsende mit einem zweiten, hier ebenfalls nicht dargestellten Schlauchanschluss verbunden, der an dem freien Endbereich des Führungsturmes 3 angeordnet ist.

Um den Glasaufbau 4 in vertikaler Richtung verfahren zu können, und um dessen Verdampfungsgefäß 5 in das Temperiergefäß 10 absenken sowie aus dem Temperiergefäß 10 auch wieder anheben zu können, ist der Glasaufbau an einer als Schlitten ausgebildeten oder einen Schlitten 21 aufweisenden Halterung gehalten. Der Schlitten 21 ist seitlich am Führungsturm 3 verfahrbar. Da der Führungsturm 3 somit unbewegt bleibt, können die beim Anheben und Absenken des Verdampfungsgefäßes 5 bewegten Teile minimiert werden.

Der Führungsturm 3 ist aus zumindest zwei Profilabschnitten 22, 23 gebildet, die in einer in Längserstreckung des Führungsturmes 3 orientierten Trennlage vorzugsweise lösbar miteinander verbunden sind. Dabei weist der Führungsturm 3 einen Profilabschnitt 22 auf, der als Hohlprofil ausgebildet ist, dessen zumindest einer Hohlprofil-Innenraum den Kanal 17 des Führungsturmes 3 bildet. Die Profilabschnitte 22, 23 des Führungsturmes 3 umgrenzen einen Hohlraum 24, der an einem in vertikaler Richtung orientierten Führungsschlitz 25 offen ausgebildet ist. Der Führungsschlitz 25 ist in der Trennlage zwischen den Profilabschnitten 22, 23 angeordnet und von den benachbarten Schmalrändern 26, 27 dieser Profilabschnitte 22, 23 umgrenzt. Im Hohlraum 24 ist die dem Schlitten 21 zugeordnete Schlittenführung 28 vorgesehen. Diese Schlittenführung 28 weist zwei, quer zur Führungsrichtung voneinander beabstandete und im Querschnitt runde Führungsstäbe 29, 30 auf, die von Führungslöchern 31, 32 im Schlitten 21 umgriffen werden.

Der Schlitten 21 trägt zumindest einen Verbindungsarm 33, der den Führungsschlitz 25 durchsetzt und mit dem Glasaufbau 4 verbunden ist. Der Schlitten 21 ist von einer Hebeposition gegen die Rückstellkraft zumindest einer Gasdruckfeder 34 in eine Absenkstellung verfahrbar. Zum Verfahren des Schlittens 21 ist eine als Hubantrieb dienende Seilwinde 35 vorgesehen, die ortsfest gegenüber dem Führungsturm 3 an der Struktur des Rotationsverdampfers 1 gehalten ist. Die Seilwinde 35 weist ein, auf eine Seiltrommel 36 aufwickelbares Seil 37 auf, das am Schlitten 21 derart geführt ist, dass durch Auf- und Abwickeln des Seiles 37 und Verkürzen und Verlängern des über die Seilwinde 35 überstehenden Seilabschnitts der Schlitten 21 von der Rückstellkraft angehoben oder gegen die Rückstellkraft abgesenkt werden kann. Bei einem Stromausfall gibt die Seilwinde 35 das darauf aufgewickelte Seil 37 derart frei, dass die Rückstellkraft den Schlitten 21 in die Hebeposition bewegen kann; da der Schlitten 21 bei einem Stromausfall somit automatisch in seine Hebeposition bewegt wird, in welcher sich das Verdampfungsgefäß 5 mit Abstand über dem Temperiergefäß 10 befindet, wird der im Verdampfungsgefäß 5 ablaufende Prozess vorsorglich unterbrochen und eine unkontrollierte Überhitzung der zu verdampfenden Flüssigkeit mit Sicherheit unterbunden.

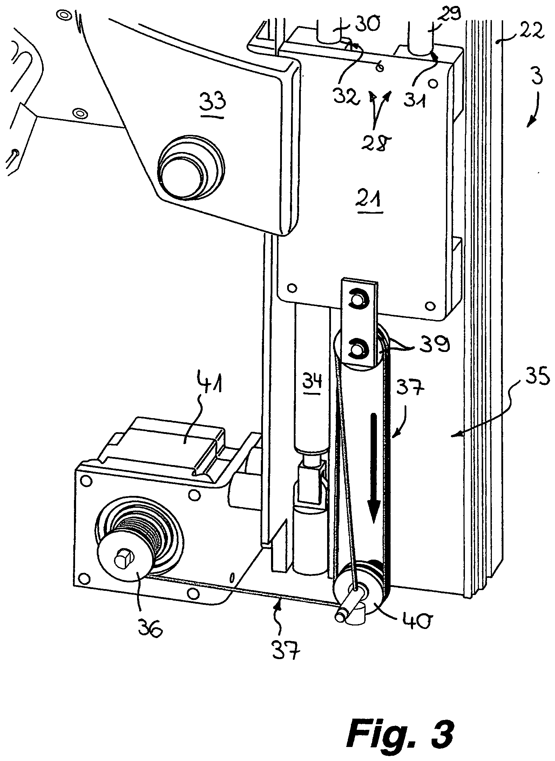

In Figur 3 ist erkennbar, dass das Seil 37 der Seilwinde 35 über einen Flaschenzug 38 geführt ist, welcher Flaschenzug 38 voneinander beabstandete Umlenkrollen 39, 40 hat. Der Flaschenzug 38 weist hier eine Übersetzung auf. Die Seilwinde 35 hat einen Schrittmotor als elektrischen Antrieb 41. Da dieser Schrittmotor ein vergleichsweise hohes Drehmoment hat, ist ein zusätzliches Getriebe überflüssig. Da die Antriebswelle des elektrischen Antriebs 41 bei abgeschaltetem Motor nahezu momentfrei ist, kann auch bei einer Stromunterbrechung eine sichere Notabschaltung gewährleistet werden, indem die wenigstens eine als Rückstellkraft dienende Gasdruckfeder 34 den Schlitten 21 in die obere Hebeposition bewegt. Dabei drückt die zumindest eine Gasdruckfeder 34 den Schlitten 21 in der oberen Hebeposition gegen einen oberen Endanschlag. Mit Hilfe eines einstellbaren unteren Anschlages kann die Eintauchtiefe des Verdampfungsgefäßes 5 im Heizbad des Temperiergefäßes 10 in Abhängigkeit von der Größe und Füllmenge des gewählten Verdampfungsgefäßes 5 eingestellt werden. Mit Hilfe der Schrittsteuerung des elektrischen Antriebes 41 lässt sich der Schlitten 21 in jeder gewünschten Hubposition verfahren. Dabei dient der Schrittsteuerung des elektrischen Antriebes 41 der obere Endanschlag als Referenz.

Der durch die Seilwinde 35, den elektrischen Antrieb 41 und den Flaschenzug 38 gebildete Hubmechanismus, der zu Beginn und Ende des Prozesses dem Absenken und Ausheben des Verdampfungsgefäßes 5 sowie der Feineinstellung seiner Eintauchtiefe im Heizbad dient, zeichnet sich durch einen vergleichsweise langen Hubweg aus, der auch bei der Verwendung großer Verdampfungsgefäße 5 deren vollständiges Ausheben aus dem Temperiergefäß 10 sicherstellt. Die Drehzahl des der Seilwinde 35 zugeordneten elektrischen Antriebes 41 ist variabel und weist zumindest zwei Drehzahlstufen auf. Während eine hohe Drehzahl eine hohe Fahrgeschwindigkeit des Schlittens 21 zum raschen Absenken oder Ausheben des Verdampfungsgefäßes 5 sicherstellt, wird mit einer demgegenüber geringeren Drehzahl eine niedrigere Geschwindigkeit des Schlittens 21 erreicht, die zur Feineinstellung der Eintauchtiefe des Verdampfungsgefäßes 5 bestimmt ist.

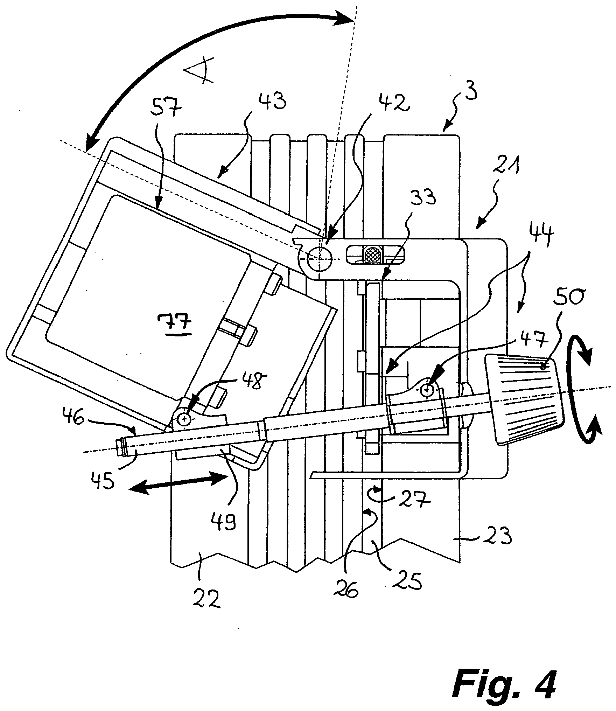

Aus Figur 4 wird deutlich, dass der Schlitten 21 hier Bestandteil einer Halterung ist, die zur Befestigung des Glasaufbaus 4 am Schlitten 21 dient. Der in den Figuren 1 und 6 näher dargestellte Glasaufbau 4 und insbesondere dessen Verdampfungsgefäß 5 ist an der Halterung um eine horizontale Schwenkachse 42 verschwenkbar gehalten. Die Halterung weist dazu ein hier als Schlitten 21 ausgebildetes Halteteil auf, an dem ein mit dem Verdampfungsgerät 5 verbindbares Trageteil 43 um die horizontale Schwenkachse 42 verschwenkbar gehalten ist. Zum Einstellen und Festlegen der gewählten Schwenkposition ist ein Spindeltrieb 44 vorgesehen, der eine Stellspindel 45 mit selbsthemmendem Spindelgewinde 46 hat. Durch Drehen an dieser Stellspindel 45 kann der Schwenkwinkel zwischen dem als Schlitten 21 ausgebildeten Halteteil und dem Trageteil 43 der Halterung verändert und die Schwenkposition eines am Trageteil 43 befestigten Verdampfungsgefäßes 5 variiert werden. Da die Stellspindel 45 ein selbsthemmendes Spindelgewinde 46 hat, ist eine zusätzliche und gegebenenfalls auch versehentlich gelöste Sicherung nicht notwendig. Der Spindeltrieb 44 erlaubt es, den Rotationsverdampfer 1 an die unterschiedlichen Abmessungen der verschiedenen Verdampfungsgefäße anzupassen. Das Trageteil 43 der Halterung trägt den gesamten Glasaufbau 4, dessen Schwerpunkt weit außermittig liegt. Ohne die Selbsthemmung des Spindelgewindes 46 bestände die Gefahr, dass der Glasaufbau beim Lösen einer alternativen Arretierung ungebremst in den unteren Anschlag fällt und bricht, wobei bei dem unter Vakuum stehenden Glasaufbau zusätzlich eine Implusionsgefahr bestehen könnte.

In Figur 4 ist erkennbar, dass die Stellspindel 45 an dem als Schlitten 21 ausgebildeten Halteteil und am Trageteil 43 vorzugsweise um eine horizontale Schwenkachse 47, 48 verschwenkbar gehalten ist. Die Stellspindel 45, die an dem als Schlitten 21 ausgebildeten Halteteil schwenkbar, aber in axialer Richtung unverrückbar gelagert ist, wirkt mit einer Spindelmutter 49 zusammen, die am Trageteil 43 um die Schwenkachse 48 verschwenkbar gehalten ist. An ihrem einen Spindelende weist die Stellspindel 45 ein Stellrad 50 auf, das als Handhabe dient. Über die Auswahl des Gewindetyps des Stellgewindes 46 und der Steigung können Verstellgeschwindigkeit und Kraftaufwand optimiert werden. Da das Stellgewinde 46 selbsthemmend ausgebildet ist, ist keine weitere Arretierung erforderlich, die andernfalls beim Lösen die Gefahr in sich birgt, dass der Glasaufbau versehentlich in den Anschlag fällt und bricht. Der Spindeltrieb 44, mit dem der Kippwinkel des Verdampfungsgefäßes 5 stufenlos verändert werden kann, ist am Stellrad 50 auch mit nur einer Hand betätigbar. In Verbindung mit der variablen Eintauchtiefe des Verdampfungsgefäßes 5 in das Temperiergefäß 10 und der weiter unten noch näher beschriebenen Verschiebbarkeit des Temperiergefäßes 10 erlaubt die in Figur 4 gezeigte Schwenkmechanik, dass ein breites Spektrum unterschiedlich großer Verdampfungsgefäße 5 bei veränderlicher Füllmenge eingesetzt werden kann.

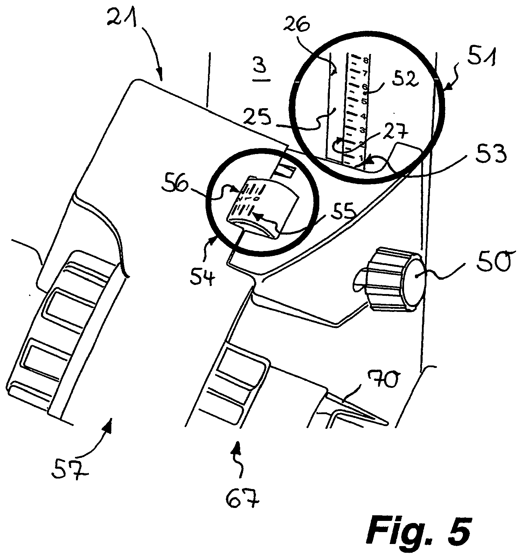

Aus einem Vergleich der Figuren 1 und 5 wird deutlich, dass der am Führungsturm 3 in vertikaler Richtung verfahrbare Schlitten 21 mittels einer Skalierung 51 positionierbar ist, die eine am Außenumfang des Führungsturmes 3 vorgesehene Skala 52 aufweist, welche mit einer am Schlitten 21 befindlichen Anzeige zusammenwirkt. Während die Skala 52 an dem zum Führungsschlitz 25 hin benachbarten außenseitigen Wandungsrandbereich des Führungsturmes 3 angeordnet ist, dient die benachbarte Kante 53 des Schlittens 21 als Anzeige der jeweiligen Hubhöhe.

Zum Positionieren des Trageteiles 43 ist eine weitere Skalierung 54 vorgesehen, die zwischen dem als Halteteil dienenden Schlitten 21 und dem Trageteil 43 vorgesehen ist. Auch diese Skalierung 54 weist eine Skala 55 auf, die hier am Schlitten 21 vorgesehen ist. Dieser Skala 55 ist eine Anzeige zugeordnet, die am Trageteil 43 angeordnet ist. Die Anzeige ist hier durch die benachbarte Kante 56 des Trageteils 43 gebildet. Mit Hilfe der Skalierung 54 lässt sich der jeweilige Schwenkwinkel des mittels der Halterung am Führungsturm 3 gehaltenen Glasaufbaus 4 messen. Die Skalierungen 51, 54 erleichtern die Reproduzierbarkeit eines Versuchsaufbaus wesentlich und begünstigen die einfache Handhabung des hier dargestellten Rotationsverdampfers 1.

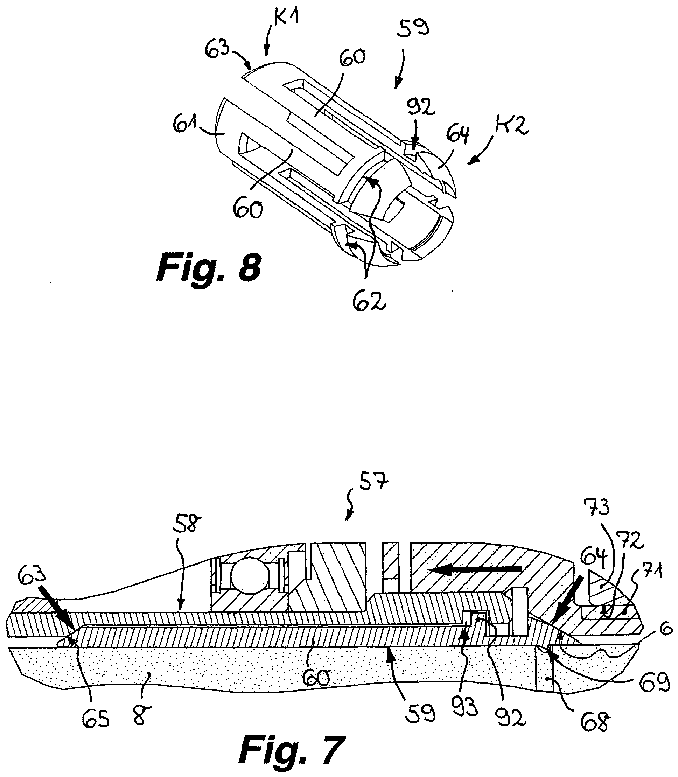

In Figur 6 ist der Rotationsverdampfer 1 in einem Detail-Längsschnitt im Bereich seines am Trageteil 43 der Halterung vorgesehenen Rotationsantriebes 57 dargestellt. Der Rotationsantrieb 57 weist eine Nabe 58 auf, die mittels eines elektrischen Antriebsmotors drehantreibbar ist. Der nicht weiter gezeigte Antriebsmotor des Rotationsantriebs 57 ist hier als bürstenloser Gleichstrommotor mit Zahnriemen-Übersetzung ausgestaltet. Um die Rotationsbewegung der Nabe 58 auf die das Verdampfungsgefäß 5 tragende Glashohlwelle 8 übertragen zu können, ist auf diese Glashohlwelle 8 der in den Figuren 7 und 8 näher dargestellte Klemmeinsatz 59 aufgeschoben. Der zum Verklemmen der Glashohlwelle 8 in der Nabe 58 bestimmte Klemmeinsatz 59 hat eine hülsenartige Grundform. Der Klemmeinsatz 59 weist dazu in Längsrichtung orientierte Stützstäbe 60 auf, die über in Umfangsrichtung des Klemmeinsatzes 59 orientierte Verbindungsstege 61, 62 miteinander verbunden sind. Die Verbindungsstege 61, 62 verbinden wechselweise die auf der einen oder die auf der anderen Seite des Klemmeinsatzes 59 angeordneten Stegenden benachbarter Stützstege 60 derart, dass ein jeder Stützsteg 60 mit seinem einen benachbarten Stützsteg über einen, auf der einen Seite des Klemmeinsatzes 59 angeordneten und in die eine Umfangsrichtung abstehenden Verbindungssteg 61 verbunden ist, während er mit dem anderen benachbarten Stützsteg über einen auf der anderen Seite des Klemmeinsatzes 59 gelegenen und in die entgegengesetzte Umfangsrichtung abstehenden Verbindungssteg 62 verbunden ist. Dabei bilden die an den gegenüberliegenden Enden des Klemmeinsatzes 59 vorgesehene Verbindungsstege 61, 62 voneinander beabstandete Klemmabschnitte K1 und K2 des Klemmeinsatzes 59. Die die Klemmabschnitte K1 und K2 bildenden Verbindungsstege 61, 62 verjüngen sich zu den freien Enden des Klemmeinsatzes 59 hin derart, dass die Klemmabschnitte K1 und K2 jeweils zumindest eine relativ zur Längsachse des Klemmeinsatzes 59 abgeschrägte Klemmschräge 63, 64 tragen, die mit ihnen zugeordneten Gegenschrägen 65 beziehungsweise 66 des Rotationsantriebes 1 in der Weise zusammenwirken, dass die Klemmabschnitte K1 und K2 durch axiale Druckbeaufschlagung des Klemmeinsatzes 59 gegen die Glashohlwelle 8 gedrückt werden. Da der Klemmeinsatz 59 durch die Stützstege 60 und die wechselweise an den gegenüberliegenden Endbereichen der Stützstege 60 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden.

Aus Figur 6 und dem Detail-Längsschnitt in Figur 7, der den mit VII gekennzeichneten Bereich in Figur 6 zeigt, wird deutlich, dass der Klemmeinsatz 59 von der dem Verdampfungsgefäß 5 zugewandten Seite der Nabe 58 aus in diese bis zu einem als Gegenschräge 65 ausgebildeten Ringabsatz am Innenumfang der Nabe 58 einsetzbar ist, und dass zur axialen Druckbeaufschlagung des Klemmeinsatzes 59 auf die Nabe 58 ein Spannschraubring 67 lösbar aufschraubbar ist, der den über die Nabe 58 vorstehenden Klemmabschnitt K2 des Klemmeinsatzes 59 mit einer am Innenumfang des Spannschraubringes 67 vorgesehenen Gegenschräge 66 beaufschlagt.

Da der Klemmeinsatz 59 durch die Stützstege 60 und die wechselweise an den gegenüberliegenden Endbereichen des Klemmeinsatzes 59 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden. Die Flexibilität des Klemmeinsatzes 59 wird durch die axial verlaufenden schmalen Stützstege 60 und die sie verbindenden Verbindungsstege 61, 62 erreicht. In den Bereichen der Kraftübertragung, nämlich in den Klemmabschnitten K1 und K2, ist der Klemmabschnitt 59 dagegen großflächig ausgeführt, um eine flächige Klemmung der als Dampfdurchführung dienenden Glashohlwelle 8 zu erreichen. Der entstehende Reibschluss fixiert die Glashohlwelle 8 spielfrei in der Nabe 58 des Rotationsantriebes 57. Am Außenumfang des Klemmeinsatzes 59 ist eine hier als (unterbrochener) Ringflansch ausgebildete umlaufende Nase 92 vorgesehen, die in eine Ringnut 93 am Innenumfang der Nabe 58 eingreift und den Klemmeinsatz 59 axial in der Nabe 58 sichert. Bei der Demontage der Glashohlwelle 8 verbleibt der Klemmeinsatz 59 somit in der Nabe 58 und lediglich der Spannschraubring 67 ist gelöst und muß nicht entfernt werden, um die Glashohlwelle 8 aus der Nabe 58 des Rotationsantriebes 57 zu entfernen.

In den Figuren 6 und 7 ist erkennbar, dass die Glashohlwelle 8 an ihrem Außenumfang eine als Ringnut ausgebildete Einformung 68 trägt, der eine als Ringwulst ausgebildete Ausformung 69 am Innenumfang des Klemmeinsatzes 59 zugeordnet ist. Da die am Klemmeinsatz 59 vorgesehene Ausformung 69 in dem über die Nabe 58 überstehenden Teilbereich des Klemmeinsatzes 59 und insbesondere am Innenumfang des über die Nabe 58 vorstehenden Klemmabschnitts K2 angeordnet ist, lässt sich die Glashohlwelle 8 auch nachträglich noch in den in der Nabe 58 befindlichen Klemmeinsatz 59 einschieben oder dort herausziehen, wenn beispielsweise ein Austausch des Verdampfungsgefäßes 5 auch einen Wechsel der Glashohlwelle 8 erfordert.

In Figur 6 wird deutlich, dass die als Dampfdurchführung dienende Glashohlwelle 8 durch die Nabe 58 des Rotationsantriebs 57 hindurch gesteckt und über den Klemmeinsatz 59, der sich zwischen der Nabe 58 und der Glashohlwelle 8 befindet, in der Nabe 58 verklemmt ist, so dass eine Rotation der Nabe 58 des Rotationsantriebs 57 um eine Längsachse der Nabe 58 zu einer entsprechenden Rotation des Klemmeinsatzes 59, der Glashohlwelle 8 und des mit der Glashohlwelle 8 drehfest verbundenen Verdampfungsgefäßes 5 führt. Die Nabe 58, der Klemmeinsatz 59 und die Glashohlwelle 8 sind konzentrisch zueinander angeordnet. Die drehfeste Verbindung zwischen der Glashohlwelle 8 und dem Verdampfungsgefäß 5 wird durch eine Schliffverbindung gewährleistet, die vorzugsweise als Kegelschliffverbindung ausgeführt ist, bei der die Glashohlwelle 8 mit ihrer dem Verdampfungsgefäß 5 zugewandten Seite, an der ein Schliffkern 94 ausgebildet ist, in eine an einem Gefäßhals des Verdampfungsgefäßes 5 ausgebildete Schliffhülse eingreift. Zur Sicherung der Schliffverbindung zwischen der Glashohlwelle 8 und dem Verdampfungsgefäß 5 kann eine zusätzliche Schliffklemme 70 (vgl. Fig. 1) vorgesehen sein.

In Figur 6 ist erkennbar, dass der Spannschraubring 67 ein Gewinde 71 trägt, das mit einem Gegengewinde 72 an einem Abdrückschraubring 73 zusammenwirkt. Beim Losschrauben des Abdrückschraubringes 73 vom Spannschraubring 67 drückt der Abdrückschraubring 73 derart auf das Verdampfungsgefäß 5 und dessen Gefäßhals, dass die Klemm- oder Schliffverbindung zwischen dem Verdampfungsgefäß 5 und der das Verdampfungsgefäß 5 tragenden Glashohlwelle 8 gelöst wird.

Die als Dampfdurchführung ausgebildete Glashohlwelle 8 reicht mit ihrem dem Verdampfungsgefäß 5 abgewandten Wellenende in die Anschlussöffnung 74 des zu dem Kühler 6 führenden Anschlussstutzens 9 hinein und ist gegenüber diesem Anschlussstutzen 9 mit einer, in den Figuren 6, 9 und 10 näher dargestellten Gleitringdichtung abgedichtet. Diese Gleitringdichtung wird durch einen Dichtring 76 gebildet, der zwischen dem Anschlussstutzen 9 und einem Antriebsgehäuse 77 des Rotationsantriebs 57 eingespannt ist und an der rotierenden Glashohlwelle 8 dichtend anliegt. Der Dichtring 76 ist als Ringscheibe ausgebildet, deren äußere Ringzone 78 als Einspannrand dient. Die Ringscheibe weist eine in Längserstreckung der Glashohlwelle 8 umgebogene Ringzone 79 auf, damit der Dichtring 76 mit einem in Längsrichtung der Glashohlwelle orientierten Teilbereich T der Ringscheibe dichtend anliegt. Dabei liegt der in Längsrichtung der Glashohlwelle 8 orientierte Teilbereich T der Ringscheibe federelastisch an der Glashohlwelle 8 an, so dass eine stets gleichbleibend gute und dauerhafte Abdichtung in diesem Bereich sichergestellt ist. Der Dichtring 76 ist einstückig ausgebildet und mit geringem Aufwand als Materialcompound herstellbar. Dabei wird ein Tefloncompound bevorzugt, der sich durch einen geringen Reibungskoeffizienten und einem reduzierten Verschleiß auszeichnet.

Der Dichtring 76, der in Längsschnitt j- oder u-förmig ausgestaltet ist und dessen die Ringöffnung begrenzender Innenrand 95 in eine der Glashohlwelle 8 abgewandte Richtung nach außen gebogen sein kann, weist an seinem Einspannrand zumindest eine Ringnut 80 auf, dem ein komplementärer Ringwulst 81 am benachbarten Stirnrand des Antriebsgehäuses 77 zugeordnet sein kann.

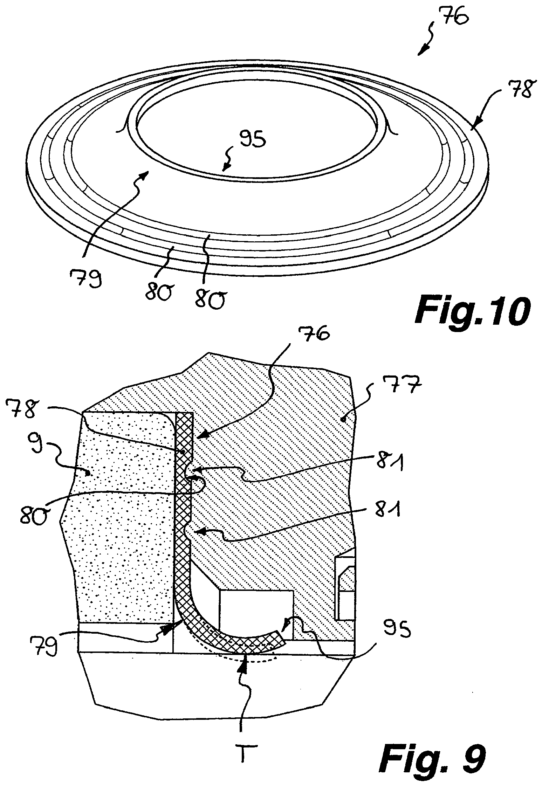

Durch ein Vergleich der in Fig. 9 zum einen in durchgezogenen Linien und zum anderen in gestrichelten Linien dargestellten inneren Ringzone 79 ist angedeutet, dass diese Ringzone 79 derart in Richtung zur Glashohlwelle 8 unter Vorspannung anliegt, dass dadurch eine automatische Nachstellung des an der Glashohlwelle 8 anliegenden Dichtringes 76 bei Abnutzung erfolgt.

Der Klemmeinsatz 59 ist vorzugsweise als Kunststoffteil und insbesondere als Kunststoffspritzgussteil ausgebildet. Da im Bereich der inneren Ringzonen 79 des Dichtringes 76 das Glas der Glashohlwelle 9, der insbesondere aus Kunststoff hergestellte Klemmeinsatz 59 und die vorzugsweise metallene Nabe 58 des Rotationsantriebs 57 unter Pressdruck aneinander anliegen, stellt eine solche Materialwahl diese Einzelteile 9, 59, 58 die ideale Kombination zwischen Weichheit, Steifigkeit und Reibschlüssigkeit dieser miteinander rotierenden Einzelteile dar.

Dem Rotationsantrieb 57 ist eine nicht weiter dargestellte Motorsteuerung zugeordnet, die vorzugsweise eine stufenlose Drehzahleinstellung insbesondere mit der Möglichkeit zur Drehrichtungsumkehr hat. Zur Vermeidung des Anhaftens von festen Rückständen an der Gefäßinnenwand, insbesondere während eines Trocknungsprozesses, kann ein Betriebmodus sinnvoll sein, der eine periodische Drehrichtungsumkehr vorsieht. Um bei einer Blockade der Rotationsbewegung eine Sicherheitsabschaltung des Rotationsverdampfers 1 zu bewirken, ist eine Überwachung des Motorstroms vorgesehen. Zur Beginn der Rotationsbewegung ist ein Sanftanlauf des Rotationsantriebes 57 vorgesehen, wozu in dessen Motorsteuerung eine entsprechende Anlaufkennlinie hinterlegt ist, die beispielsweise eine Begrenzung des Motorstromes vorsehen kann.

Das Temperiergefäß 10 dient der Temperierung des im Temperiergefäß 10 befindlichen Flüssigkeitsbades und insbesondere der kontrollierten Wärmezufuhr in das Verdampfungsgefäß 5. Das Temperiergefäß 10 weist dazu eine elektrische Temperiereinrichtung und insbesondere eine elektrische Heizeinrichtung auf. Das als Temperierflüssigkeit verwendete Öl oder Wasser wird durch die Rotation des Verdampfungsgefäßes 5 derart umgewälzt, dass eine homogene Temperaturverteilung sichergestellt ist. Die Trägheit der Badtemperatur stabilisiert die Heiztemperatur bei Einsetzen des Siedens im Verdampfungsgefäß 5 (Verdampfungskälte).

Um das Temperiergefäß 10 einfach befüllen und entleeren zu können, ist das Temperiergefäß 10 lösbar auf den Geräteständer 2 des Rotationsverdampfers aufgesetzt. Der Geräteständer 2 ist ausreichend standsicher, um ein Umkippen des Rotationsverdampfers 1 auch bei entferntem Temperiergefäß 10 auszuschließen. Am Geräteständer 2 oder am Temperiergefäß 10 ist zumindest ein Positioniervorsprung vorgesehen, der mit einer zugeordneten Positioniereinformung am Temperiergefäß 10 beziehungsweise am Geräteständer 2 zusammenwirkt. Der Rotationsverdampfer 1 weist vorzugsweise zwei solcher, mit jeweils einer Positioniereinformung zusammenwirkender, beispielsweise zapfenartig vorstehender Positioniervorsprünge auf, von denen der eine zur elektrischen Kontaktierung der im Temperiergefäß 10 vorgesehenen Temperiereinrichtung mit einem elektrischen Anschluss am Geräteständer und von denen der andere Positioniervorsprung zur Kontaktierung der Signalverbindung zwischen dem Rotationsverdampfer 1 und einem in das Temperiergefäß 10 integrierten Temperatursensor bestimmt ist.

Im Bereich von Positioniervorsprung und Positioniereinformung, die etwa achsparallel zur Rotationsachse des Rotationsantriebes 57 verfahrbar sind, ist eine elektrische Kupplung angeordnet, die zum elektrischen Kontaktieren der im Temperiergefäß vorgesehenen Temperiereinrichtung mit einem elektrischen Anschluss am Geräteständer bestimmt ist. Um die Position des Verdampfungsgefäßes 5 relativ zum Geräteständer 2 variieren und um unterschiedlich große Verdampfungsgefäße 5 im Rotationsverdampfer 1 einsetzen zu können, ist der wenigstens eine, am Geräteständer 2 vorgesehene Positioniervorsprung oder die Positioniereinformung daran mittels einer hier nicht weiter dargestellten Schiebeführung verfahrbar gehalten. Diese Schiebeführung hat zumindest zwei teleskopartig ineinander geführte Schiebeteile, von denen ein Schiebeteil am Geräteständer 2 unverrückbar gehalten ist, und von denen ein anderes Schiebeteil den zumindest einen Positioniervorsprung oder die wenigstens eine Positioniereinformung trägt.

Aus Figur 1 wird deutlich, dass das Temperiergefäß 10 zumindest in seinem lichten Innenquerschnitt und vorzugsweise auch in seinem Außenquerschnitt eine etwa dreieckige Grundform aufweist. Um einem Schwappen der im Temperiergefäß 10 befindlichen Temperierflüssigkeit im Betrieb und beim Transport des Temperiergefäßes 10 entgegenzuwirken, weist das Temperiergefäß 10 mit Ausnahme im Bereich einer Ausgießtülle 87 vertikal orientierte, das heißt weitgehend senkrechte Gefäß-Innenwände 88 auf. Die Ausgießtülle 87 ist in Verlängerung der Scheitellinie 75 der dreieckigen Grundform vorgesehen, wobei die Scheitellinie 75 in die dem Verdampfungsgefäß 5 zugewandte Richtung orientiert ist. Am Außenumfang des Temperiergefäßes 10 sind ergonomische Griffmulden vorgesehen, an denen sich das Temperiergefäß bequem ergreifen lässt. Eine vorzugsweise an zumindest einer der Gefäß-Innenwände 88 vorgesehene Skala zeigt die Füllhöhe der Temperierflüssigkeit an. Da das Temperiergefäß 10 entlang der Rotationsachse verschiebbar ist, ist ein großes Spektrum von Verdampfungsgefäßen einsetzbar. Auch größere Verdampfungsgefäße 5 können im Temperiergefäß 10 eintauchen, weil dies entsprechend tief ausgestaltet ist. Auf dem Temperiergefäß 10 ist eine transparente Abdeckhaube 89 aufsetzbar. Die Abdeckhaube 89 weist wenigstens ein, auf dem oberen Schmalrand des Temperiergefäßes 10 absetzbares erstes Haubenteil 90 auf, an dem mindestens ein zweites Haubenteil 91 verschwenkbar oder aufklappbar gehalten ist. Da das während des Betriebes meist unter Vakuum stehende Verdampfungsgefäß 5 zum Zwecke eines verbesserten Wärmeübergangs im Flüssigkeitsbad aus unbeschichtetem Glas hergestellt ist und da vorzugsweise nur die übrigen Komponenten des Glasaufbaus 4 aus bruchfestem oder als Splitterschutz beschichtetem Glas bestehen, dient die Abdeckhaube 89 als Splitterschutz.

Das Temperiergefäß 10 weist einen Füllstandsensor auf, der mit einer Dosierpumpe in Steuerverbindung steht, die mit einem Temperierflüssigkeitsvorrat verbunden ist. Der Füllstandsensor ist Bestandteil einer Füllstandsüberwachung, die bei Unterschreiten eines Temperierflüssigkeits-Minimums eine Notabschaltung bewirkt. Der Füllstandsensor kann zusätzlich oder stattdessen auch Bestandteil einer Füllstandsregelung sein, die zur Kompensation von Verdunstungsverlusten bestimmt ist.

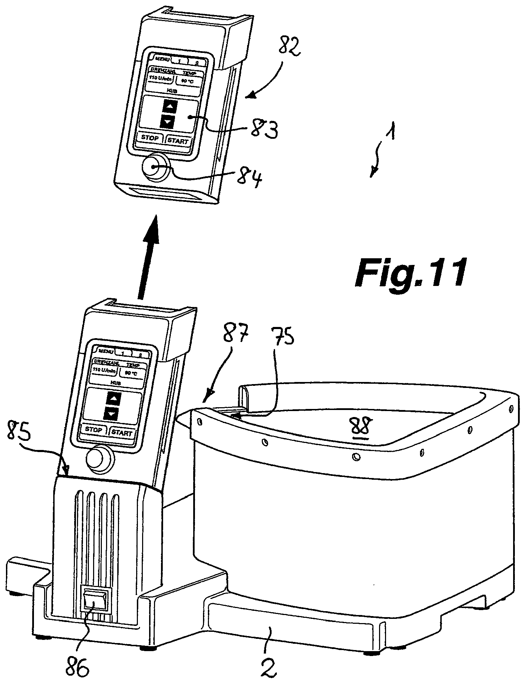

Aus einem Vergleich der Figuren 1 und 11 wird deutlich, dass die Bedienung des Rotationsverdampfers 1 über eine zentrale Bedienungseinheit 82 erfolgt, die einen direkten Zugriff auf alle technischen Funktionalitäten und somit u.a. auch auf Rotationsantrieb 57, Hubantrieb und die im Temperiergefäß 10 vorgesehene Temperiereinrichtung ermöglicht.

Um den Rotationsverdampfer 1 auch bedienen zu können, wenn sich dieser geschützt beispielsweise in einem Abzug befindet, ist die Bedienungseinheit 82 als eine vom Rotationsverdampfer 1 lösbare und vorzugsweise drahtlose Fernbedienungseinheit ausgebildet. Eine Datenübertragungsschnittstelle, die beispielsweise als USB-Schnittstelle ausgebildet sein kann, erlaubt die Prozesssteuerung und/oder die Dokumentation der Prozessparameter an einer externen Datenverarbeitungsanlage und insbesondere am PC. Die als drahtlose Fernbedienung verwendbare Fernbedienungseinheit 82 weist ein Display 83 auf, das vorzugsweise als Touch-Screen mit intuitiven, an den Betriebsmodus angepassten Bedienelementen ausgestaltet ist. An der Bedienungseinheit 82 ist ein hier als Druck- und Drehknopf ausgebildeter Bedienknopf 84 als weiteres Bedienelement vorgesehen, das beispielsweise zur Eingabe von Zahlenwerten genutzt werden kann.

Am Rotationsverdampfer 1 ist eine Konsole oder Ablage 85 für die Bedienungseinheit 82 vorgesehen, die bei abgelegter Bedienungseinheit 82 eine optimale Bedienhöhe der Bedienelemente und des Displays 83 sicherstellt und die dazu über den Geräteständer 4 vorsteht. Der erfindungsgemäße Rotationsverdampfer kann wahlweise entweder mit der auf der Konsole 85 befindlichen Fernbedienungseinheit 82 unmittelbar bedient oder über die Fernbedienungseinheit 82 auch mit Abstand betätigt werden. Ein Netzschalter 86, der auch als Not-Aus verwendbar ist, ist gut erreichbar auf der Vorderseite des Rotationsverdampfers 1 angeordnet.

Das als Touch-Screen ausgestaltete Display 83 dient beispielsweise zur Anzeige der Ist-Temperatur im Flüssigkeitsbad, der Soll-Temperatur der in das Temperiergefäß 10 integrierten Temperiereinrichtung, der Drehzahl des Rotationsantriebes oder zur Anzeige vergleichbarer Prozessparameter. Um die auf dem Display 83 ersichtlichen Kontrollfunktionen auswählen und/oder die Prozessparameter verändern zu können, kann zusätzlich oder stattdessen auch der Bedienknopf 84 verwendet werden. Um die Bedienung der vorzugsweise im Rotationsverdampfer 1 befindlichen Steuerungseinrichtung, die auch die Motorsteuerung für den Rotationsantrieb 57 umfassen kann, möglichst einfach zu gestalten, sind einzelne Funktionen der Steuerungseinrichtung in einer auf dem Display 83 darstellbaren Menüstruktur angeordnet, wobei das Blättern durch die einzelnen Menüs mittels dem Bedienknopf 84 und/oder dem gegebenenfalls als Touch-Screen ausgebildeten Display 83 erfolgt.

Die am Rotationsverdampfer 1 über dessen Geräteständer 4 vorstehende Ablage oder Konsole 85 ist zur Auflage oder Ablage der Fernbedienungseinheit 82 vorgesehen. Die Ablage oder Konsole 85 hat zumindest ein mit der Bedienungseinheit 82 lösbar verbindbares Kontaktsystem, das für die Stromzuführung zum Ladesystem für die in der Bedienungseinheit 82 befindlichen Akkus und vorzugsweise auch zur Leiter-basierten Steuerverbindung zwischen dem wenigstens einen Bedienelement 83, 84 der Bedienungseinheit 82 und der Steuerungseinrichtung unter Ausschaltung der drahtlosen Steuerverbindung aufweist. Liegt die Bedienungseinheit 82 auf der Ablage oder Konsole 85 auf, wird die drahtlose Steuerbindung vorläufig eingestellt zu Gunsten einer Leiter-basierten Steuerverbindung zwischen dem wenigstens einen, an der Bedienungseinheit 82 vorgesehenen Bedienelement 83, 84 und der Steuerungseinrichtung.

Die Steuerungseinrichtung des Rotationsverdampfers 1 weist auch eine Not-Aus-Funktion auf, deren Auslösen die Stromzufuhr zur Temperiereinrichtung im Temperiergefäß 10 unterbricht und die Hochfahrbewegung des am Führungsturm 3 verfahrbar gehaltenen Glasaufbaus 4 in die Ruheposition auslöst. Dabei kann die in der Steuerungsseinrichtung abgespeicherte Not-Aus-Funktion beispielsweise manuell an einem speziellen Not-Aus-Schalter an der Bedienungseinheit 82 oder am Netzschalter 86 des Rotationsverdampfers 1 oder auch automatisch ausgelöst werden, wenn die Bedienungseinheit 82 nicht mehr mit Strom versorgt wird oder die drahtlose Steuerverbindung zwischen der Fernbedienungseinheit 82 und dem Rotationsverdampfer 1 unterbrochen wird. Da die Stromzufuhr zur Temperiereinrichtung im Temperiergefäß 10 unterbrochen wird, ist ein weiteres unkontrolliertes Aufheizen des Versuchaufbaus nicht zu 'befürchten. Da auch das Verdampfungsgefäß 5 aus der im Flüssigkeitsbad befindlichen Betriebsstellung in die außerhalb des Temperiergefäßes 10 vorgesehene Ruheposition verfahren wird, kann die im Verdampfungsgefäß 10 befindliche Flüssigkeit nicht unbeabsichtigt durch die im Flüssigkeitsbad befindliche Restwärme aufgeheizt werden.

Auf dem Display 83 der Bedienungseinheit 82 ist beispielsweise auch die Ist-Temperatur der im Temperiergefäß 10 befindlichen Temperierflüssigkeit ablesbar. Über das als Touch-Screen ausgebildete Display 83 und/oder den Bedienknopf 84 kann die benötigte Soll-Temperatur der im Temperiergefäß 10 befindlichen Temperierflüssigkeit vorgegeben werden. Auf gleiche Weise ist in die Steuerungseinrichtung auch eine Drehrichtungsänderung des Rotationsantriebs 57 vorzugsweise in vorwählbaren Zeitabständen vorgebbar. Über die Bedienungseinheit 82 kann schließlich auch vorgegeben werden, wie weit das Verdampfungsgefäß 5 des Glasaufbaus 4 am Führungsturm 3 heruntergefahren werden soll, wobei durch Drehen am Bedienknopf 84 auch eine Feinjustierung der Eintauchtiefe des Verdampfungsgefäßes 5 im Temperiergefäß 10 möglich sein kann.

Durch das Erwärmen des Verdampfungsgefäßes 5 im Flüssigkeitsbad des Temperiergefäßes 10 verdampft die im Verdampfungsgefäß 5 befindliche Lösung und der Dampf strömt durch die als Dampfdurchführung dienende Glashohlwelle 8 in den zum Kühler 6 führenden Anschlussstutzen 9. Im Kühler 6 kann der Dampf kondensieren und in das Auffanggefäß 7 abfließen. Eine Abtrennung von Stoffbestandteilen wird dadurch erreicht, dass sich deren Siedepunkte unterscheiden, so dass bei einer vorgegebenen Temperatur bestimmte Stoffe verdampfen können, während andere Stoffe vorerst noch im Verdampfungsgefäß verbleiben. Durch Anlegen eines Vakuums an dem Glasaufbau 4 kann die Siedetemperatur gesenkt werden, wodurch höhersiedende Lösungsmittel bei geringerer Temperatur verdampft werden können, als es bei Normaldruck der Fall wäre. In dem unter Vakuum stehenden Glasaufbau 4 lassen sich auch Substanzen destillieren, die temperaturempfindlich sind. Durch das Arbeiten bei geringerer Siedetemperatur kann eine Zersetzung solcher temperaturempfindlicher Substanzen verhindert werden. Der als Gleitringdichtung dienende Dichtring 76 dichtet dabei die rotierende Glashohlwelle 8 gegen den Atmosphärendruck ab und sorgt so für die Aufrechterhaltung des Vakuums im Inneren des Glasaufbaus 4. Da der Innendurchmesser des Dichtringes 76 etwas kleiner als der Durchmesser der Glashohlwelle 8 in diesem Bereich ist, ergibt sich eine Vorspannung des Dichtringes 76, die durch die am Dichtring anliegende Druckdifferenz weiter erhöht wird. Bei Abnutzung des Dichtringes 76 durch Abrieb stellt sich die Gleitringdichtung aufgrund der Vorspannung des Dichtringes 76 selbst nach. Die am Antriebsgehäuse 77 vorgesehenen Ringwülste 81 drücken den Dichtring ringförmig gegen den Anschlussstutzen 9, und zwar derart, dass die Überhöhung der Flächenpressung entlang dieser beiden geschlossenen Linien zusätzlich für eine optimale Abdichtung sorgt.

Die Beendigung des Verdampfungsprozesses erfolgt durch eine kontrollierte Abschaltung, die unabhängig von der Stromversorgung bei einem Ausheben des Verdampfungsgefäßes 5 aus dem Temperiergefäß 10, bei einem Rotationsstopp des Rotationsantriebes 57, bei einer schlagartigen Aufhebung des im Glasaufbau 4 erzeugten Vakuums oder bei einer Abschaltung der Kühlung des Kühlers 6 erfolgt, wobei dem Kühler 6 hierzu eine Schnittstelle für ein Schaltventil zugeordnet ist. Eine Abschaltung des Rotationsverdampfers 1 und somit eine Beendigung des Verdampfungsprozesses kann durch einen Anwender, durch Erreichen eines vorgegebenen Prozessparameters (Prozessende), einen Prozessfehler oder durch Stromausfall ausgelöst werden.

**Bezugszeichenliste**

| | |
|---|---|
| Rotationsverdampfer 1 | 1 |
| Geräteständer | 2 |
| Führungsturm | 3 |
| Glasaufbau | 4 |
| Verdampfungsgefäß | 5 |
| Kühler | 6 |
| Auffanggefäß | 7 |
| Glashohlwelle | 8 |
| Anschlussstutzen (des Kühlers) | 9 |
| Temperiergefäß | 10 |
| Schlauchanschluß (am Glasaufbau) | 11 |
| Schlauchanschluß (am Glasaufbau) | 12 |
| Schlauchanschluß (am Glasaufbau) | 13 |
| Schlauchleitung (frei verlegt) | 14 |
| Schlauchleitung (frei verlegt) | 15 |
| Schlauchleitung (frei verlegt) | 16 |
| Kanal | 17 |
| Schlauchleitung (im Führungsturm) | 18 |
| Schlauchleitung (im Führungsturm) | 19 |
| Schlauchleitung (im Führungsturm) | 20 |
| Schlitten | 21 |
| Profilabschnitt (Hohlprofil) | 22 |
| Profilabschnitt | 23 |
| Hohlraum (zischen den Profilabschnitten) | 24 |
| Führungsschlitz | 25 |
| Schmalrand (des Profilabschnittes 22) | 26 |
| Schmalrand (des Profilabschnittes 23) | 27 |
| Schlittenführung | 28 |
| Führungsstab (der Schlittenführung 28) | 29 |
| Führungsstab (der Schlittenführung 28) | 30 |
| Führungsloch (im Schlitten 21) | 31 |
| Führungsloch (im Schlitten 21) | 32 |
| Verbindungsarm | 33 |
| Gasdruckfeder | 34 |
| Seilwinde | 35 |
| Seiltrommel | 36 |
| Seil | 37 |
| Flaschenzug | 38 |
| Umlenkrollen (des Flaschenzuges) | 39 |
| Umlenkrollen (des Flaschenzuges) | 40 |
| elektrischer Antrieb (der Seilwinde) | 41 |
| Schwenkachse (der Halterung) | 42 |
| Trageteil (der Halterung) | 43 |
| Spindeltrieb | 44 |
| Stellspindel | 45 |
| Spindelgewinde | 46 |
| Schwenkachse (der Stellspindel am Halteteil) | 47 |
| Schwenkachse (der Spindelmutter) | 48 |
| Spindelmutter | 49 |
| Stellrad | 50 |
| Skalierung (für Hubhöhe) | 51 |
| Skala (der Skalierung 51) | 52 |
| Kante (des Schlittens 21 als Anzeige der Hubhöhe) | 53 |
| Skalierung (für den Schwenkwinkel) | 54 |
| Skala (der Skalierung 54) | 55 |
| Kante (am Tragteil 43 als Anzeige der Skalierung 54) | 56 |
| Rotationsantrieb | 57 |
| Nabe | 58 |
| Klemmeinsatz | 59 |
| Stützstege | 60 |
| Verbindungsstege (links) | 61 |
| Verbindungsstege (rechts) | 62 |
| Klemmschräge (links) | 63 |
| Klemmschräge (rechts) | 64 |
| Gegenschräge (in der Nabe) | 65 |
| Gegenschräge (im Spannschraubring) | 66 |
| Spannschraubring | 67 |
| Einformung | 68 |
| Ausformung | 69 |
| Schliffklemme | 70 |
| Gewinde (am Spannschraubring 67) | 71 |
| Gegengewinde (am Abdrückschraubring) | 72 |
| Abdrückschraubring | 73 |
| Anschlussöffnung (des Anschlussstutzens) | 74 |
| Scheitellinie | 75 |
| Dichtring | 76 |
| Antriebsgehäuse | 77 |
| äußere Ringzone (des Dichtrings) | 78 |
| umgebogene Ringzone (des Dichtringes) | 79 |
| Ringnut (am Dichtring) | 80 |
| Ringwulst (am Stirnrand des Antriebsgehäuses) | 81 |
| (Fern-)Bedienungseinheit | 82 |
| Display | 83 |
| Bedienknopf | 84 |
| Ablage oder Konsole (für Bedienungseinheit) | 85 |
| Netzschalter | 86 |
| Ausgießtülle | 87 |
| Gefäß-Innenwände des Temperiergefäßes | 88 |
| Abdeckhaube | 89 |
| festes Haubenteil | 90 |
| aufklappbares Haubenteil | 91 |
| Nase | 92 |
| Ringnut | 93 |
| Schliffkern | 94 |
| Innenrand | 95 |
| Klemmabschnitt (links) | K1 |
| Klemmabschnitt (rechts) | K2 |
| Teilbereich (des Dichtringes) | T |

## Patentansprüche

1. Rotationsverdampfer (1) mit einem Geräteständer (2), auf dem ein Führungsturm (3) übersteht, der eine Halterung hat, an welcher ein Verdampfungsgefäß (5) um eine horizontale Schwenkachse (42) verschwenkbar gehalten ist,
und die ein mit dem Führungsturm verbundenes Halteteil aufweist, das seitlich am Führungsturm (3) in dessen Längsrichtung verfahrbar ist und an dem ein mit dem Verdampfungsgefäß (5) verbindbares Trageteil (43) um eine horizontale Schwenkachse (42) verschwenkbar gehalten ist, **dadurch gekennzeichnet, dass** das Halteteil als Schlitten (21) ausgebildet ist,
dass zum Einstellen und Festlegen der gewählten Schwenkposition ein Spindeltrieb (44) vorgesehen ist, der eine Stellspindel (45) mit selbsthemmendem Spindelgewinde (46) hat, dass die Stellspindel (45) am Halteteil um eine horizontale Schwenkachse (47) verschwenkbar,
aber in axialer Richtung unverrückbar gelagert ist, dass die Stellspindel (45) mit einer Spindelmutter (49) zusammenwirkt, die am Trageteil (43) um eine horizontale Schwenkachse (47) verschwenkbar gehalten ist, dass die Stellspindel (45) an zumindest einem Spindelende ein Stellrad (50) oder dergleichen Handhabe aufweist, dass zum Positionieren des Trageteiles (43) eine Skalierung (54) vorgesehen ist, die zwischen dem Halteteil und dem Trageteil (43) angeordnet ist, dass die Skalierung (54) eine Skala (55) hat, die am Halteteil oder am Trageteil (43) vorgesehen ist, und dass der Skala (55) eine Messlinie oder dergleichen Anzeige zugeordnet ist, die am Trageteil (43) oder am Halteteil angeordnet ist.

2. Rotationsverdampfer nach Anspruch 1, **dadurch gekennzeichnet, dass** das Halteteil als Schlitten (21) ausgebildet ist, der seitlich am Führungsturm (3) in dessen Längsrichtung verfahrbar ist.

## Claims

1. Rotary evaporator (1) having a device stand (2), on which a guide tower (3) projects, having a holder on which an evaporation vessel (5) is held so as to be pivotable about a horizontal pivot axis (42), and which comprises a holding part which is connected to the guide tower, is able to travel laterally on the guide tower (3) in the longitudinal direction thereof and on which a carrying part (43), which can be connected to the evaporation vessel (5), is held so as to be pivotable about a horizontal pivot axis (42), **characterised in that** the holding part is formed as a carriage (21), that a spindle drive (44) is provided in order to adjust and fix the selected pivot position, said spindle drive having an adjusting spindle (45) with a self-locking spindle thread (46), that the adjusting spindle (45) is mounted on the holding part so as to be pivotable about a horizontal pivot axis (47) but so that it cannot be displaced in the axial direction, that the adjusting spindle (45) cooperates with a spindle nut (49) which is held on the carrying part (43) so as to be pivotable about a horizontal pivot axis (47), that the adjusting spindle (45), on at least one spindle end, comprises an adjusting wheel (50) or similar handle, that in order to position the carrying part (43) a graduation (54) is provided, which is disposed between the holding part and the carrying part (43), that the graduation (54) has a scale (55) which is provided on the holding part or on the carrying part (43) and that the scale (55) has associated therewith a measuring line or similar indicator which is disposed on the carrying part (43) or on the holding part.

2. Rotary evaporator as claimed in claim 1, **characterized in that** the holding part is formed as a carriage (21) which can travel laterally on the guide tower (3) in the longitudinal direction thereof.

## Revendications

1. Évaporateur rotatif (1) avec un pied d'appareil (2) au-dessus duquel se dresse une tour de conduite (3), qui comporte un support sur lequel un récipient d'évaporation (5) est maintenu de façon pivotante autour d'un axe de pivotement horizontal (42) et qui présente une partie de maintien reliée à la tour de conduite, qui est déplaçable latéralement à la tour de conduite (3) dans la direction longitudinale de ladite tour de conduite (3) et sur laquelle une partie de support (43) pouvant être reliée au récipient d'évaporation (5) est maintenue de façon pivotante autour d'un axe de pivotement horizontal (42), **caractérisé en ce que** la partie de maintien est réalisée en forme de chariot (21), **en ce qu'**il est prévu pour le réglage et la fixation de la position de pivotement sélectionnée un mécanisme à broche (44), qui comprend une broche de réglage (45) avec un filet de broche autobloquant (46), **en ce que** la broche de réglage (45) est montée sur la partie de maintien de façon pivotante autour d'un axe de pivotement horizontal (47), mais de façon immobile en direction axiale, **en ce que** la broche de réglage (45) coopère avec un écrou de broche (49), qui est maintenu sur la partie de support (43) de façon pivotante autour d'un axe de pivotement horizontal (47), **en ce que** la broche de réglage (45) présente à au moins une extrémité de broche une roue de réglage (50) ou une manette analogue, **en ce qu'**il est prévu pour le positionnement de la partie de support (43) une graduation (54), qui est disposée entre la partie de maintien et la partie de support (43), **en ce que** la graduation (54) comporte une échelle (55) qui est prévue sur la partie de maintien ou sur la partie de support (43), et **en ce qu'**à l'échelle (55) est associée une ligne de mesure ou un affichage analogue, qui est disposé(e) sur la partie de support (43) ou sur la partie de maintien.

2. Évaporateur rotatif selon la revendication 1, **caractérisé en ce que** la partie de maintien est réalisée en forme de chariot (21), qui est déplaçable latéralement à la tour de conduite (3) dans la direction longitudinale de ladite tour de conduite (3).
